# EUROPEAN PATENT APPLICATION

(11) **EP 4 757 027 A1**
(43) Date of publication of application: **10.06.2026**
(21) Application number: 25219532.6
(22) Date of filing: 28.11.2025
(51) Int. Cl.: H01M 50/213, H01M 50/503, H01M 50/507, H01M 50/509

(54) **BATTERY PACK**

(30) Priority: 05.12.2024 KR 20240179055
(71) Applicant: SK On Co., Ltd., Seoul 03161 (KR)
(72) Inventor: KWAK, Seung Il, 34124 Daejeon (KR); JIN, Shanshan, 34124 Daejeon (KR); HEO, Won Tae, 34124 Daejeon (KR); LEE, Jung Kwan, 34124 Daejeon (KR); PARK, Soo In, 03161 Seoul (KR)
(74) Representative: Prüfer & Partner mbB Patentanwälte · Rechtsanwälte

(57) **Abstract**

A battery pack includes one or more battery modules. Each of the battery modules includes a plurality of battery cells having a plurality of first electrode terminals and a plurality of second electrode terminals, a first busbar electrically connected to a plurality of first electrode terminals, a second busbar electrically connected to a plurality of second electrode terminals, and a first insulator disposed between the first busbar and the second busbar and configured to electrically insulate the first and second busbars.

## Description

### TECHNICAL FIELD

Embodiments of the present disclosure relate to a battery pack.

### BACKGROUND

A secondary battery is one of the energy storage means which can be charged and discharged through electrochemical reactions. The secondary battery is used in various fields using electrical energy. For example, the secondary battery is widely used in the field of mobile devices such as mobile phones, notebooks, and tablets, and broader use is being explored in the field of transportation means such as vehicles, aircraft, and ships. In addition, demand for secondary batteries is increasing in the field of energy storage systems (ESSs) for utilizing surplus power.

The secondary battery may be used by being electrically connected in a plurality depending on the voltage, current, and the like required by the load. That is, the secondary battery may be provided as one unit battery cell, and a plurality of such unit battery cells may be combined to provide one battery pack. In some cases, the battery cells may be combined into an intermediate unit such as a module, and a plurality of such battery modules may be combined to provide one battery pack. The battery pack may be provided such that a plurality of battery cells are electrically connected in series and/or in parallel depending on the voltage, current, and the like required by the load. For example, the battery cells may be electrically connected to each other via a bus bar to constitute a battery module, a battery pack, or the like.

### SUMMARY

Some embodiments of the present disclosure may provide a battery pack.

Some embodiments of the present disclosure may provide a battery pack that can more easily implement electrical connections for a plurality of battery cells.

Some embodiments of the present disclosure may provide a battery pack in which a manufacturing process can be easily performed.

Some embodiments of the present disclosure may provide a battery pack that can improve the reliability of electrical connections.

Some embodiments of the present disclosure may provide a battery pack that can improve structural stability.

Some embodiments of the present disclosure may be widely applied in green technology fields such as electric vehicles, battery charging stations, and solar power generation and wind power generation utilizing batteries. Some embodiments of the present disclosure may also be used in eco-friendly electric vehicles and hybrid vehicles for preventing climate change by reducing air pollution and greenhouse gas emissions.

According to an aspect of the present disclosure, a battery pack comprising one or more battery modules may be provided. Each of the battery modules may include a plurality of battery cells having a plurality of first electrode terminals and a plurality of second electrode terminals, a first busbar electrically connected to the plurality of first electrode terminals, a second busbar electrically connected to the plurality of second electrode terminals, and a first insulator disposed between the first busbar and the second busbar and configured to electrically insulate the first and second busbars.

In some embodiments, the first busbar may comprise a plurality of first connection portions provided to respectively correspond to the plurality of first electrode terminals and a first access hole provided in each first connection portion to expose each second electrode terminal toward the second busbar.

In some embodiments, the first access hole may have a diameter greater than a diameter of the second electrode terminal to contain the second electrode terminal therein.

In some embodiments, the first insulator may comprise a plurality of first guide surfaces provided to respectively correspond to the plurality of second electrode terminals and configured to guide a position of the second busbar and a second access hole provided in each first guide surface to expose each second electrode terminal toward the second busbar.

In some embodiments, the first guide surface may be inclined downward toward the second access hole.

In some embodiments, the second access hole may have a diameter corresponding to a diameter of the second electrode terminal.

In some embodiments, the second busbar may include a plurality of second connection portions provided to respectively correspond to the plurality of second electrode terminals and a second guide surface corresponding to the second connection portion and disposed to guide a position of the second busbar relative to the first insulator.

In some embodiments, the first busbar may be disposed on upper portions of the plurality of battery cells to be electrically connected to the plurality of first electrode terminals and the second busbar and the first insulator may be integrally provided and disposed on an upper portion of the first busbar.

In some embodiments, the battery module may further include a second insulator disposed on a surface of the first busbar opposite to a surface on which the first insulator is disposed.

In some embodiments, the battery module may include a second insulator provided on a lower surface of the first busbar, and a third insulator provided on an upper surface of the second busbar. The first to third insulators may be in a sheet form, may include the first and second busbars therein, and may be thermally bonded thereto.

In some embodiments, the first electrode terminal may be provided on an edge region of an upper surface of the battery cell, the second electrode terminal may be provided on a central region of the upper surface of the battery cell, and the first and second busbars may be disposed on upper portions of the plurality of battery cells to be electrically connected to the first and second electrode terminals, respectively.

In some embodiments, the first electrode terminal may be provided on a side surface region of the battery cell, the second electrode terminal may be provided on a central region of an upper surface of the battery cell, at least a portion of the first busbar may be disposed on the side surface region to be electrically connected to the first electrode terminal, the second busbar may be disposed on upper portions of the plurality of battery cells to be electrically connected to the second electrode terminal.

In some embodiments, the first insulator may include a protrusion extending between adjacent battery cells toward the side surface region.

In some embodiments, the first busbar may comprise an exposed portion extending outward from the second busbar for electrical connection with another adjacent battery module.

In some embodiments, the second busbar may include an extending portion extending outward from the first busbar for electrical connection with another adjacent battery module.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a perspective view illustrating a battery module according to some embodiments of the present disclosure;
FIG. 2 is an exploded perspective view of the battery module illustrated in FIG. 1;
FIG. 3 is a partial cross-sectional view of the battery module illustrated in FIG. 1;
FIG. 4 is an exemplary view illustrating a method of assembling the battery module illustrated in FIG. 1;
FIG. 5 is a perspective view illustrating an example of a battery pack in which a plurality of battery modules in FIG. 1 are combined;
FIG. 6 is a perspective view illustrating another example of a second busbar different from the second busbar shown in FIG. 1 according to some embodiments of the present disclosure;
FIG. 7 is an exploded perspective view illustrating another example of the battery module according to some embodiments of the present disclosure;
FIG. 8 is a partial cross-sectional view of the battery module illustrated in FIG. 7;
FIG. 9 is a cross-sectional view illustrating still another example of the battery module according to some embodiments of the present disclosure;
FIG. 10 is a cross-sectional view illustrating yet another example of the battery module and the battery pack according to some embodiments of the present disclosure; and
FIG. 11 is a cross-sectional view illustrating yet another example of the battery pack according to some embodiments of the present disclosure.

### DETAILED DESCRIPTION

The present disclosure will be described in detail with reference to the accompanying drawings. However, this is merely exemplary, and the present disclosure is not limited to the exemplified specific embodiments.

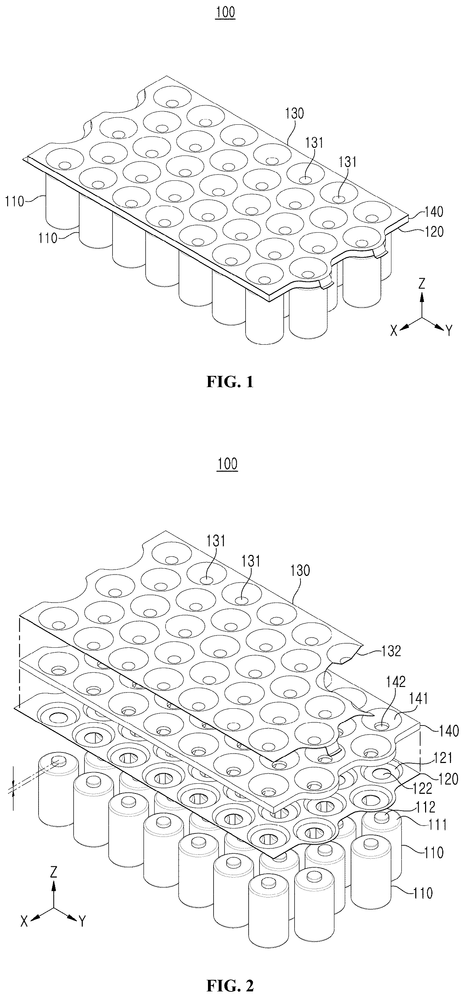

FIG. 1 is a perspective view illustrating a battery module according to some embodiments of the present disclosure. FIG. 2 is an exploded perspective view of the battery module illustrated in FIG. 1.

For convenience of description, based on the coordinate axes shown in FIG. 1 and the like, an X-axis direction is referred to as a left-right direction, a Y-axis direction is referred to as a front-rear direction, and a Z-axis direction is referred to as an up-down direction.

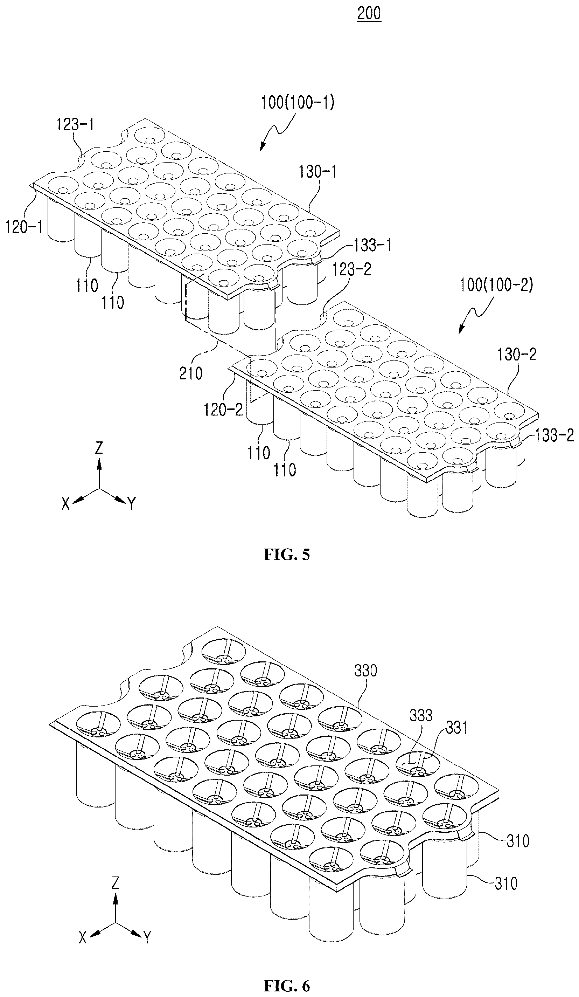

Referring to FIGS. 1 and 2, in some embodiments, a battery pack 200 (see FIG. 5) may comprise one or more battery modules 100. That is, the battery pack 200 may be provided by combining one or more battery modules 100. For reference, FIGS. 1 and 2 illustrate one battery module 100, and FIG. 5, which will be described below, illustrates a battery pack 200 in which a plurality (for example, two) of such battery modules 100 are combined. The battery pack 200 will be described below with reference to FIG. 5 and the like, and first, the battery module 100 constituting the battery pack 200 will be described.

In some embodiments, the battery pack 200 may comprise one or more battery modules 100, and the battery module 100 may comprise: a plurality of battery cells 110 having first and second electrode terminals 111 and 112; a first busbar 120 electrically connected to the plurality of first electrode terminals 111; a second busbar 130 electrically connected to the plurality of second electrode terminals 112; and a first insulator 140 disposed between the first and second busbars 120 and 130 to insulate the first and second busbars 120 and 130.

Specifically, the battery module 100 may comprise a plurality of battery cells 110. In some embodiments, each of the battery cells 110 may be provided in a cylindrical shape having a predetermined diameter and height. For example, the battery cell 110 may have a diameter of about 46 mm and a height of about 80 mm. In some cases, a battery cell 110 having such a form factor may be referred to as a '4680 battery.' As another example, the battery cell 110 may have a diameter of about 46 mm and a height of about 80 mm, have a diameter of about 46 mm and a height of about 95 mm, or have a diameter of about 46 mm and a height of about 110 mm. In some cases, a battery cell 110 having such a form factor may be referred to as a '46xx battery,' in which 'xx' indicates the height of the corresponding form factor. As still another example, the battery cell 110 may have a diameter of about 48 mm and a height of about 75 mm, have a diameter of about 48 mm and a height of about 80 mm, or have a diameter of about 48 mm and a height of about 110 mm. In some cases, a battery cell 110 having such a form factor may be referred to as a '48xx battery,' in which 'xx' indicates the height of the corresponding form factor. However, in embodiments of the present disclosure, the diameter and height of the battery cell 110 may vary and are not necessarily limited to the examples described above.

Although the cylindrical battery cell 110 is exemplified in the present disclosure, the form factor of the battery cell 110 is not necessarily limited to the form factors described above. The embodiments of the present disclosure may be appropriately implemented or applied to coin-type, prismatic-type, pouch-type, or other non-standardized type battery cells 110 within the scope of the present disclosure in the description below.

In some embodiments, the battery cell 110 may comprise the first and second electrode terminals 111 and 112. The first electrode terminal 111 may be provided as a positive electrode terminal or a negative electrode terminal, and the second electrode terminal 112 may be provided as a negative electrode terminal or a positive electrode terminal corresponding thereto. For example, the first electrode terminal 111 may be provided as a negative electrode terminal, and the second electrode terminal 112 may be provided as a positive electrode terminal.

In some embodiments, the first and second electrode terminals 111 and 112 may be provided on the same surface of the battery cell 110. For example, the first and second electrode terminals 111 and 112 may both be provided on an upper surface region of the battery cell 110, as illustrated. In addition, the first and second electrode terminals 111 and 112 may be provided in separate regions on one surface, i.e., upper surface, of the battery cell 110. For example, the first electrode terminal 111 may be provided in an edge region of an upper surface of the battery cell 110, as illustrated, and the second electrode terminal 112 may be provided in a central region of the upper surface of the battery cell 110. The first and second electrode terminals 111 and 112 may be electrically insulated from each other by an insulating member such as a gasket.

In some embodiments, the second electrode terminal 112 may be provided by a rivet fastened to the upper surface of the battery cell 110. The rivet may be provided to be insulated from the upper surface of the battery cell 110 by an insulating member such as a gasket. Accordingly, the second electrode terminal 112 may be provided to be insulated from the upper surface or the first electrode terminal 111 of the battery cell 110. In some embodiments, the rivet may be provided to protrude a predetermined height from the upper surface of the battery cell 110. That is, an upper surface of the rivet may be disposed a predetermined amount higher than the upper surface of the battery cell 110. Accordingly, the second electrode terminal 112 corresponding to the upper surface of the rivet and the first electrode terminal 111 corresponding to the upper surface of the battery cell 110 may have a predetermined height difference. That is, the second electrode terminal 112 may be disposed above the first electrode terminal 111.

In some embodiments, a plurality of battery cells 110 may be provided. The plurality of battery cells 110 may be arranged on a plane in front-to-rear and left-to-right directions. In some embodiments, the plurality of battery cells 110 may be arranged in a planar dense arrangement structure. The dense arrangement structure may refer to a structure in which three battery cells 110 are arranged on a plane to correspond to each vertex of an equilateral triangle. The dense arrangement structure may function to reduce the dead space in the cylindrical battery cells 110.

In some embodiments, the battery pack 200 may comprise a plurality of battery cells 110 stacked in multiple layers. For reference, the illustrated embodiment shows a plurality of battery cells 110 arranged in a single layer. In some embodiments, the battery pack 200 may comprise a plurality of such battery modules 100 stacked vertically in multiple layers.

In some embodiments, the number of battery cells 110 constituting the battery module 100 and the number of battery modules 100 constituting the battery pack 200 may be appropriately selected according to the voltage, current, and the like required by the load. In the present disclosure, the number of battery cells 110 constituting the battery module 100 and the number of battery modules 100 constituting the battery pack 200 are not particularly limited.

Although not illustrated, in some embodiments, the battery module 100 may comprise a housing that accommodates the battery cells 110 therein. The housing may be provided in various forms depending on the number and arrangement of the battery cells 110. In some embodiments, the housing may be partially or entirely internalized or integrated into an installation target. For example, the housing may be partially or entirely internalized or integrated into a vehicle body or chassis. In some cases, such internalization or integration of the housing may be referred to in the art as cell-to-body (CTB), cell-to-chassis (CTC), or the like.

In some embodiments, the battery module 100 may comprise a first busbar 120. The first busbar 120 may be electrically connected to a plurality of first electrode terminals 111. That is, the first busbar 120 may be electrically connected to the first electrode terminals 111 provided on each battery cell 110.

In some embodiments, the first busbar 120 may be provided in a plate shape having a predetermined planar shape. For example, as illustrated, the first busbar 120 may be provided in a roughly rectangular plate shape having a short side in the left-right direction and a long side in the front-rear direction. Such a shape of the first busbar 120 may be similarly applied to the second busbar 130 and the first insulator 140, which will be described below. However, the specific shape of the first busbar 120 may be variously modified depending on the number and arrangement of the battery cells 110, and is not necessarily limited to the illustrated examples.

In some embodiments, the first busbar 120 may comprise a first connection portion 121. The first connection portion 121 may be provided to be electrically connected to the first electrode terminal 111 of each battery cell 110. Accordingly, a plurality of first connection portions 121 may be provided to correspond to the plurality of first electrode terminals 111. In addition, the plurality of first connection portions 121 may be spaced apart from each other on a plane in the front-rear and left-right directions to correspond to the plurality of first electrode terminals 111.

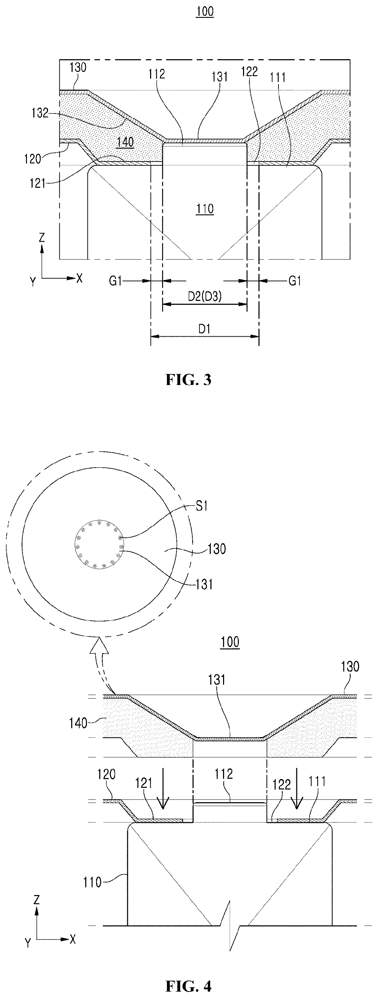

In some embodiments, the first connection portion 121 may be provided such that an upper surface of the first busbar 120 is formed concavely inward. For example, as illustrated, the first connection portion 121 may be provided such that the upper surface of the first busbar 120 having a circular planar shape is formed concavely inward. In some embodiments, such a concavely recessed shape may function to guide the position of the first insulator 140. That is, the first insulator 140 may be disposed at an appropriate assembly position on the upper surface of the first busbar 120 while a lower surface thereof is seated on the concavely recessed portion (see FIG. 4).

In some embodiments, the first busbar 120 may comprise a first access hole 122. The first access hole 122 may be provided in each of the first connection portions 121. In the illustrated embodiment, the first access hole 122 is provided at the center of the first connection portion 121. The first access hole 122 may be formed to pass vertically through the first busbar 120. Accordingly, the second electrode terminal 112 disposed below the first busbar 120 may be exposed through the first access hole 122. In addition, the exposed second electrode terminal 112 may be accessible to the second busbar 130 disposed above. That is, the second electrode terminal 112 may be exposed to the second busbar 130 through the first access hole 122.

In some embodiments, the first access hole 122 may be formed to be a predetermined amount larger than the second electrode terminal 112. Specifically, the first access hole 122 may have a predetermined diameter D1 in a plan view, and the second electrode terminal 112 may also have a predetermined diameter D2 in a plan view (see FIG. 3). Here, the diameter D1 of the first access hole 122 may be formed to be a predetermined amount larger than the diameter D2 of the second electrode terminal 112. That is, the first access hole 122 may have a diameter D1 that is greater than the diameter D2 of the second electrode terminal 112 such that the second electrode terminal 112 is contained therein in a plan view. Accordingly, the first busbar 120 may be appropriately spaced a predetermined distance G1 from the second electrode terminal 112.

In some embodiments, the battery pack 200 may comprise the first insulator 140. The first insulator 140 may be disposed between the first and second busbars 120 and 130 to electrically insulate the first and second busbars 120 and 130. For example, as illustrated, the first insulator 140 may be disposed to be seated on an upper portion of the first busbar 120, and the second busbar 130 may be disposed to be seated on an upper portion of the first insulator 140 so as to be insulated from the first busbar 120.

In some embodiments, the first insulator 140 may be provided in a plate shape having a predetermined flat shape. For example, as illustrated, the first insulator 140 may be provided in a roughly rectangular plate shape corresponding to the first busbar 120. However, the specific shape of the first insulator 140 may be variously modified as necessary, and is not necessarily limited to the illustrated example.

In some embodiments, the first insulator 140 may comprise a first guide surface 141. A plurality of first guide surfaces 141 may be provided to correspond to the plurality of second electrode terminals 112. In addition, the plurality of first guide surfaces 141 may be spaced apart from each other on a plane in the front-rear and left-right directions to correspond to the plurality of second electrode terminals 112.

In some embodiments, the first guide surface 141 may function to guide the position of the second busbar 130. That is, as will be described below, the second busbar 130 may be disposed such that a second guide surface 132 is seated on the first guide surface 141, thereby guiding an assembly position with the first insulator 140. In some embodiments, at least a portion of the first guide surface 141 may be formed as an inclined surface. For example, as illustrated, the first guide surface 141 may be formed to be inclined downward toward the center. Such a first guide surface 141 may function to appropriately guide the alignment of the second busbar 130.

In some embodiments, the first insulator 140 may comprise a second access hole 142. The second access hole 142 may be provided in each of the first guide surfaces 141. In the illustrated embodiment, the second access hole 142 is provided at the center of the first guide surface 141. The second access hole 142 may be formed to vertically pass through the first insulator 140. Accordingly, the second electrode terminal 112 disposed below the first insulator 140 may be exposed to the second busbar 130 disposed above through the second access hole 142.

In some embodiments, the second access hole 142 may be formed to have a size corresponding to the second electrode terminal 112. Specifically, the second access hole 142 may have a predetermined diameter D3 in a plan view, and the diameter D3 of the second access hole 142 may be formed to have a size corresponding to the diameter D2 of the second electrode terminal 112 described above (see FIG. 3). Accordingly, as the second access hole 142 is fastened to the second electrode terminal 112, the assembly position of the first insulator 140 relative to the battery cell 110 may be appropriately guided.

In some embodiments, the battery module 100 may comprise a second busbar 130. The second busbar 130 may be electrically connected to the plurality of second electrode terminals 112. That is, the second busbar 130 may be electrically connected to the second electrode terminal 112 provided on each battery cell 110.

In some embodiments, the battery module 100 may be configured to electrically connect the plurality of battery cells 110 in parallel via the first and second busbars 120 and 130 as described above. That is, the plurality of battery cells 110 constituting one battery module 100 may be electrically connected in parallel to each other, with each first electrode terminal 111 electrically connected to the first busbar 120 and each second electrode terminal 112 electrically connected to the second busbar 130. In some embodiments, the battery pack 200 may comprise a plurality of such battery modules 100 electrically connected in series (see FIG. 5).

In some embodiments, the second busbar 130 may be provided in a plate shape having a predetermined flat shape. For example, the second busbar 130 may be provided in a roughly rectangular plate shape corresponding to the first busbar 120 and the first insulator 140, as illustrated. However, the specific shape of the second busbar 130 may be modified in various ways as needed and is not necessarily limited to the example shown.

In some embodiments, the second busbar 130 may comprise a second connection portion 131. The second connection portion 131 may be provided to be electrically connected to the second electrode terminal 112 of each battery cell 110. Accordingly, a plurality of second connection portions 131 may be provided to correspond to the plurality of second electrode terminals 112. In addition, the plurality of second connection portions 131 may be spaced apart from each other on a plane in the front-rear and left-right directions to correspond to the plurality of second electrode terminals 112.

In some embodiments, the second connection portion 131 may be provided such that an upper surface of the second busbar 130 is formed concavely inward. For example, as illustrated, the second connection portion 131 may be provided such that the upper surface of the second busbar 130 is formed concavely downward. In the illustrated embodiment, the second connection portion 131 may be provided at the center of the concavely recessed portion and may be electrically connected to the second electrode terminal 112 disposed below.

In some embodiments, the second busbar 130 may comprise the second guide surface 132. A plurality of second guide surfaces 132 may be provided to correspond to the plurality of second connection portions 131. The second guide surface 132 may function to guide the position of the second busbar 130 relative to the first insulator 140. That is, as the second guide surface 132 is seated on the first guide surface 141 provided in the first insulator 140, the assembly position of the second busbar 130 relative to the first insulator 140 may be appropriately guided.

In some embodiments, the second guide surface 132 may be provided at a lower surface portion of the second busbar 130. For example, the second guide surface 132 may be provided as a partial region of the lower surface of the second busbar 130 surrounding each second connection portion 131 in a plan view. In some embodiments, at least a portion of the second guide surface 132 may be formed as an inclined surface corresponding to the first guide surface 141. For example, the second guide surface 132 may be formed to be inclined downward toward the central second connection portion 131. Such a second guide surface 132 may function to guide the second busbar 130 to an appropriate assembly position together with the first guide surface 141.

FIG. 3 is a partial cross-sectional view of the battery module 100 illustrated in FIG. 1.

FIG. 3 illustrates a state in which the first and second busbars 120 and 130 are electrically connected to the first and second electrode terminals 111 and 112, respectively, centered on one battery cell 110. Referring to FIG. 3, in some embodiments, the first busbar 120 may be seated on upper portions of the plurality of battery cells 110 so as to be electrically connected to the plurality of first electrode terminals 111. For example, as illustrated, the first busbar 120 may be seated on the upper surface of the battery cell 110 such that the first connection portion 121 is electrically connected to the first electrode terminal 111 provided in an edge region of the upper surface of the battery cell 110.

In some embodiments, the first insulator 140 may be seated on the upper portion of the first busbar 120. In addition, the second busbar 130 may be seated on the upper portion of the first insulator 140. The second busbar 130 may be insulated from the first busbar 120 by the first insulator 140. The second busbar 130 may also be configured to be electrically connected to the plurality of second electrode terminals 112. For example, as illustrated, the second electrode terminal 112 may be exposed upward by passing through the first busbar 120 and the first insulator 140, and the second busbar 130 may be electrically connected to the second electrode terminal 112 thus exposed.

In some embodiments, the first insulator 140 and the second busbar 130 as described above may be integrally provided. For example, the first insulator 140 and the second busbar 130 may be integrally formed by insert injection molding. The integrated first insulator 140 and second busbar 130 may contribute to simplifying the assembly process of the battery module 100.

The first and second busbars 120 and 130 may be disposed on the upper portions of the plurality of battery cells 110 as described above to be electrically connected to the first and second electrode terminals 111 and 112 of each battery cell 110. In some embodiments, the first and second busbars 120 and 130 may be configured to electrically connect the plurality of battery cells 110 in parallel. That is, the first busbar 120 may be electrically connected to the plurality of first electrode terminals 111, and the second busbar 130 may be electrically connected to the plurality of second electrode terminals 112, so that the battery module 100 may be configured to electrically connect the plurality of battery cells 110 in parallel. Further, as will be described below, in some embodiments, the battery pack 200 may comprise a plurality of such battery modules 100 electrically connected in series (see FIG. 5).

FIG. 4 is an exemplary view illustrating a method of assembling the battery module 100 illustrated in FIG. 1.

FIG. 4 illustrates a state in which the first busbar 120, the first insulator 140, and the second busbar 130 are assembled on a single battery cell 110. Referring to FIG. 4, in some embodiments, the battery module 100 may be assembled by sequentially stacking the first busbar 120, the first insulator 140, and the second busbar 130 on the upper portion of the battery cell 110. Such a stacked assembly method may contribute to simplifying the manufacturing process of the battery module 100.

Specifically, a plurality of battery cells 110 may be prepared. The plurality of battery cells 110 may be arranged on a plane according to a predetermined arrangement pattern.

Subsequently, the first busbar 120 may be disposed on the upper portions of the plurality of battery cells 110. The first busbar 120 may be disposed such that the first connection portion 121 is seated on the upper surface of the battery cell 110. The second electrode terminal 112 of the battery cell 110 may be exposed upward through the first access hole 122 provided in the first busbar 120. In some cases, the exposed second electrode terminal 112 may be used to determine whether the first busbar 120 is properly assembled.

Subsequently, the first connection portion 121 may be electrically connected to the first electrode terminal 111. Accordingly, the first busbar 120 may be electrically connected to the plurality of battery cells 110. The electrical connection between the first connection portion 121 and the first electrode terminal 111 may be achieved in various ways. In various embodiments of the present disclosure, the manner of electrically connecting the first connection portion 121 and the first electrode terminal 111 may not be particularly limited. For example, the first connection portion 121 may be electrically connected to the first electrode terminal 111 by welding, a conductive adhesive, or the like. For reference, since this process is performed before the first insulator 140 and the like are disposed, an appropriate working space may be secured above the first busbar 120, thereby allowing easy access of a welding member or the like to an upper side of the first connection portion 121.

Subsequently, the first insulator 140 may be seated on the upper portion of the first busbar 120. In addition, the second busbar 130 may be seated on the upper portion of the first insulator 140. In some cases, the second busbar 130 may be pre-assembled in a state of being seated on the upper portion of the first insulator 140, or may be provided integrally with the first insulator 140. In such a case, the first insulator 140 and the second busbar 130 may be assembled together on the upper portion of the first busbar 120.

In some embodiments, an assembly position of the first insulator 140 may be properly guided as the second access hole 142 is fastened to the second electrode terminal 112. In some cases, the second electrode terminal 112 exposed through the second access hole 142 may be used to determine whether the first insulator 140 is properly assembled. In addition, in some embodiments, an assembly position of the second busbar 130 may be properly guided as the second guide surface 132 is fastened to the first guide surface 141 of the first insulator 140.

As illustrated, when the first insulator 140 and the second busbar 130 are properly seated, the second connection portion 131 provided in the second busbar 130 may be electrically connected to the second electrode terminal 112 of the battery cell 110. Similar to the first connection portion 121 described above, the manner of electrically connecting the second connection portion 131 and the second electrode terminal 112 is not particularly limited. For example, the second connection portion 131 and the second electrode terminal 112 may be electrically connected by welding, a conductive adhesive, or the like. In some embodiments, the second connection portion 131 may be electrically connected to the second electrode terminal 112 by laser welding. For example, as illustrated, the second connection portion 131 may be laser welded to the second electrode terminal 112 to form a weld spot S1 in a roughly circular trajectory.

When the first and second busbars 120 and 130 are electrically connected to the first and second electrode terminals 111 and 112, respectively, as illustrated, the battery module 100 may be provided in a state in which the plurality of battery cells 110 are electrically connected.

FIG. 5 is a perspective view illustrating an example of a battery pack in which a plurality of battery modules 100 in FIG. 1 are combined.

Referring to FIG. 5, in some embodiments, the battery pack 200 may be provided by combining one or more battery modules 100. For convenience, FIG. 5 illustrates an example in which two battery modules 100 are combined. However, the number of battery modules 100 constituting the battery pack 200 may be variously selected as needed.

For convenience, each battery module 100 will be referred to as a first battery module 100-1 and a second battery module 100-2.

In some embodiments, the battery pack 200 may comprise the first and second battery modules 100-1 and 100-2 electrically connected to each other. For example, the battery pack 200 may comprise the first and second battery modules 100-1 and 100-2 electrically connected in series. Specifically, in the illustrated embodiment, a second busbar 130-1 of the first battery module 100-1 may be electrically connected to a first busbar 120-2 of the second battery module 100-2, thereby electrically connecting the first and second battery modules 100-1 and 100-2 in series.

In some embodiments, the second busbar 130-1 of the first battery module 100-1 and the first busbar 120-2 of the second battery module 100-2 may be electrically connected to each other through a module busbar 210. For reference, in FIG. 5, the module busbar 210 is illustrated in a schematic connection form only. The module busbar 210 may comprise a first end portion electrically connected to the second busbar 130-1 and a second end portion electrically connected to the first busbar 120-2, and may be formed to extend between the first and second end portions. In addition, depending on the positions of the first and second busbars 120-2 and 130-1, in some embodiments, the module busbar 210 may be formed in a sloped or bent shape.

In some embodiments, the first busbars 120-1 and 120-2 may comprise exposed portions 123-1 and 123-2, respectively.

The exposed portions 123-1 and 123-2 may be provided to be exposed outside planar regions of the second busbars 130-1 and 130-2 for electrical connection with other adjacent battery modules. In addition, the second busbars 130-1 and 130-2 may comprise extending portions 133-1 and 133-2. The extending portions 133-1 and 133-2 may be provided to extend outward from planar regions of the first busbars 120-1 and 120-2 for electrical connection with other adjacent battery modules. Such exposed portions 123-1 and 123-2 and extending portions 133-1 and 133-2 may be used for electrical connection between adjacent battery modules 100-1 and 100-2. In some embodiments, the exposed portions 123-1 and 123-2 and the extending portions 133-1 and 133-2 may replace the module busbar 210 described above.

More specifically, focusing on the illustrated embodiment, the first battery module 100-1 may comprise an exposed portion 123-1 at a rear edge portion and an extending portion 133-1 at a front edge portion. The exposed portion 123-1 may be formed by a rear end portion of the first busbar 120-1 being exposed upward. The second busbar 130-1 may be partially removed in a region corresponding to the exposed portion 123-1. The extending portion 133-1 may be formed by a front end portion of the second busbar 130-1 extending forward. Accordingly, the second busbar 130-1 may extend outward from a planar region of the first busbar 120-1 in a region corresponding to the extending portion 133-1. The exposed portion 123-1 and the extending portion 133-1 may also be provided in the second battery module 100-2 in the same or similar manner.

The extending portion 133-1 of the first battery module 100-1 may be seated on the exposed portion 123-2 of the second battery module 100-2 to be electrically connected thereto. For example, the extending portion 133-1 of the first battery module 100-1 may be electrically connected to the exposed portion 123-2 of the second battery module 100-2 by welding, a conductive adhesive, or the like. Accordingly, the second busbar 130-1 of the first battery module 100-1 may be electrically connected to the first busbar 120-2 of the second battery module 100-2. That is, the first and second battery modules 100-1 and 100-2 may be electrically connected in series. The extending portions 133-1 and 133-2 and the exposed portions 123-1 and 123-2 may contribute to reducing an assembly gap between the battery modules 100-1 and 100-2.

FIG. 6 is a perspective view illustrating another example of a second busbar 330 different from the second busbar 130 shown in FIG. 1 according to some embodiments of the present disclosure.

For convenience, the following description will focus on differences from the embodiments described above.

The embodiment of FIG. 6 differs from the embodiments described above in the shape of a second connection portion 331. Referring to FIG. 6, in some embodiments, the second connection portion 331 may be formed in an extended leg shape. Specifically, the second busbar 330 may be provided with third access holes 333 corresponding to respective battery cells 310, and the second connection portion 331 may be formed to extend in a leg shape from an edge of each third access hole 333 toward the inside of the third access hole 333.

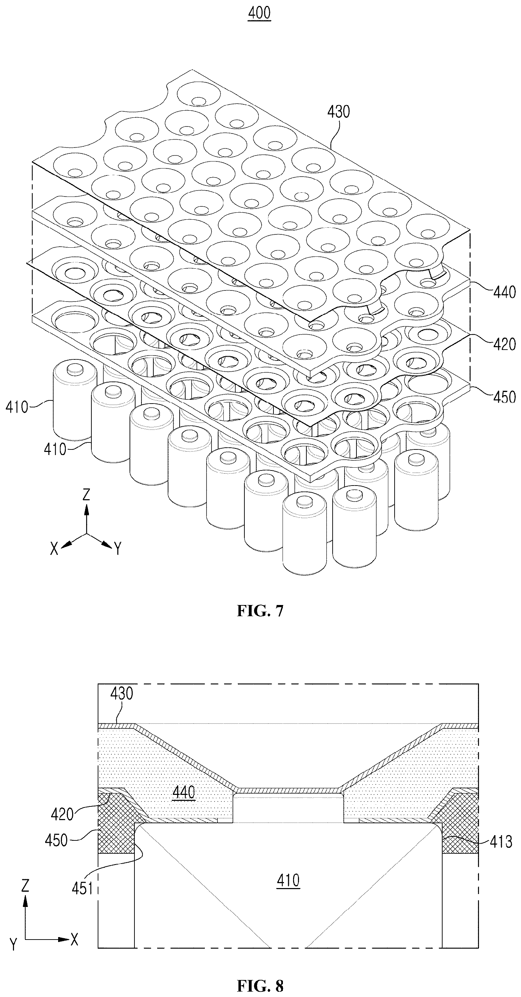

FIG. 7 is an exploded perspective view illustrating a battery module 400 according to some embodiments of the present disclosure. FIG. 8 is a partial cross-sectional view of the battery module 400 illustrated in FIG. 7.

Referring to FIGS. 7 and 8, in some embodiments, the battery module 400 may further comprise a second insulator 450. The second insulator 450 may be disposed on a first busbar 420 on a surface opposite to a surface on which a first insulator 440 is disposed. For example, as illustrated, the second insulator 450 may be disposed on a lower surface of the first busbar 420.

In some embodiments, the second insulator 450 may be integrally provided with the first busbar 420. For example, the second insulator 450 and the first busbar 420 may be integrally formed through insert injection molding. The integrated second insulator 450 and first busbar 420 may contribute to simplifying an assembly process of the battery module 400.

In some embodiments, the second insulator 450 may comprise a third guide surface 451 configured to guide an assembly position with a battery cell 410. For example, a lower surface of the second insulator 450 may be provided with grooves concavely recessed upward to correspond to the respective battery cells 410, and the third guide surface 451 may be provided on an inner side surface of each groove. Thus, when the second insulator 450 is assembled on an upper end of the battery cell 410, the third guide surface 451 may be fastened to an upper side surface 413 of the battery cell 410 and may function to guide an assembly position of the second insulator 450.

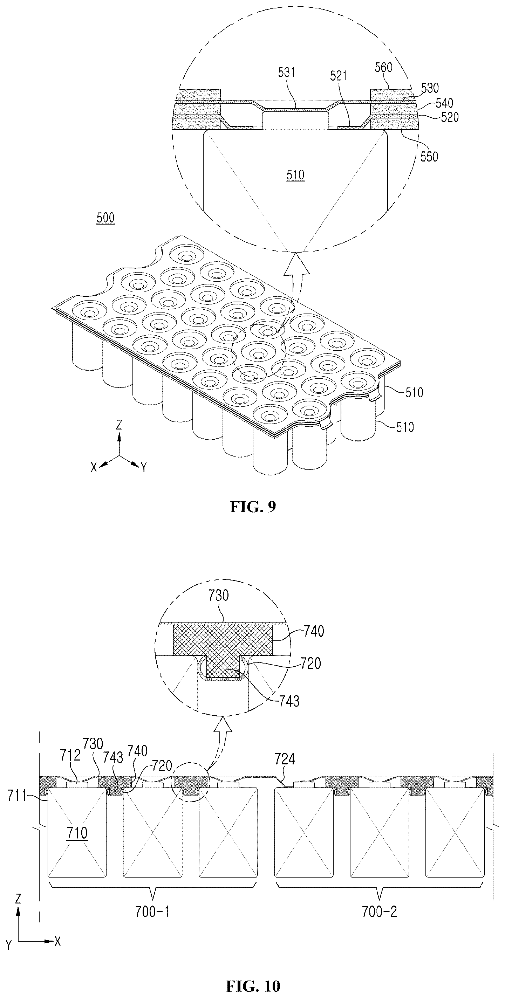

FIG. 9 is a cross-sectional view illustrating another example of a battery module 500 according to some embodiments of the present disclosure.

Referring to FIG. 9, in some embodiments, first and second busbars 520 and 530 may be disposed inside first to third insulators 540, 550, and 560 that are provided in a sheet form. Specifically, the battery module 500 may comprise the first to third insulators 540, 550, and 560. The first insulator 540 may be disposed between the first and second busbars 520 and 530, the second insulator 550 may be disposed on a lower surface of the first busbar 520, and the third insulator 560 may be disposed on an upper surface of the second busbar 530. The first and second busbars 520 and 530 may be disposed inside the first to third insulators 540, 550, and 560 such that first and second connection portions 521 and 531 for electrical connection with a battery cell 510 are partially exposed.

In the above, the first to third insulators 540, 550, and 560 may be provided in a sheet form. In addition, the first to third insulators 540, 550, and 560 provided in a sheet form may comprise the first and second busbars 520 and 530 therein and may be thermally bonded thereto. That is, as illustrated, the second insulator 550, the second busbar 530, the first insulator 540, the first busbar 520, and the third insulator 560 may be sequentially stacked, and the stacked first to third insulators 540, 550, and 560 may be thermally bonded to the first and second busbars 520 and 530, respectively. Accordingly, a single module component integrating the first to third insulators 540, 550, and 560 and the first and second busbars 520 and 530 may be provided. In addition, such a module component may be assembled and electrically connected to the battery cell 510 to provide the battery module 500.

In some embodiments, the first to third insulators 540, 550, and 560 and/or the first and second busbars 520 and 530 may be provided with guides configured to properly guide assembly positions during stacking. For example, the guides may comprise reference holes, protrusions, ribs, or mating surfaces that guide the assembly positions of the busbars 520 and 530 relative to the insulators 540, 550, and 560. In some cases, the guides may also function as fixing members for fixing assembly positions between the insulators 540, 550, and 560 and the busbars 520 and 530.

FIG. 10 is a cross-sectional view illustrating another example of the battery module and the battery pack according to some embodiments of the present disclosure.

Referring to FIG. 10, in some embodiments, a first electrode terminal 711 may be provided on a side surface region of a battery cell 710. For example, as illustrated, the first electrode terminal 711 may be provided on an upper side surface region of the battery cell 710. A second electrode terminal 712 may be provided in a central region of an upper surface of the battery cell 710. The second electrode terminal 712 may be provided similarly to that described above with reference to FIG. 1.

In the above, first and second busbars 720 and 730 may be disposed with a first insulator 740 interposed therebetween, and may be electrically connected to first and second electrode terminals 711 and 712, respectively. The second busbar 730 may be disposed on an upper portion of the battery cell 710 to be electrically connected to the second electrode terminal 712, which is generally similar to that described above with reference to FIG. 1. At least a portion of the first busbar 720 may be disposed on a side surface region of the battery cell 710 to be electrically connected to the first electrode terminal 711.

Specifically, in some embodiments, the first insulator 740 may comprise a protrusion 743. The protrusion 743 may be formed to extend between adjacent battery cells 710 toward a side surface region of the battery cell 710. For example, as illustrated, the protrusion 743 may protrude downward from a lower surface of the first insulator 740 and extend toward the upper side surface region of the battery cell 710. In some embodiments, the protrusion 743 may function to maintain an appropriate spacing between adjacent battery cells 710 or to guide proper alignment.

In some embodiments, the first busbar 720 may be disposed on the protrusion 743 as described above. Accordingly, the first busbar 720 may be at least partially disposed on a side surface region of the battery cell 710. The first busbar 720 may also be configured to be elastically pressed to come into contact with the side surface regions between adjacent battery cells 710. For example, the first busbar 720 may be partially or entirely formed of an elastic material and may be provided to protrude a predetermined amount toward the side surface region of the battery cell 710. In addition, the first busbar 720 may have a protruding shape configured to be fitted between adjacent battery cells 710. Accordingly, the first busbar 720 may be elastically pressed to come into contact with the side surface regions between adjacent battery cells 710. The first busbar 720 may also be pressed to come into contact with side surface regions of each battery cell 710 in this manner to be electrically connected to the first electrode terminal 711 provided on the side surface region of each battery cell 710. In some cases, a conductive adhesive may be provided between the first busbar 720 and the first electrode terminal 711.

In some embodiments, the second busbar 730 may comprise an extending portion 724, and the extending portion 724 may be electrically connected to a first electrode terminal of another adjacent battery module 700-2. For example, in the illustrated embodiment, the first battery module 700-1 may comprise the extending portion 724 at a front end portion facing the second battery module 700-2, and the extending portion 724 may be electrically connected to a first electrode terminal of the second battery module 700-2. Accordingly, the first and second battery modules 700-1 and 700-2 may be electrically connected.

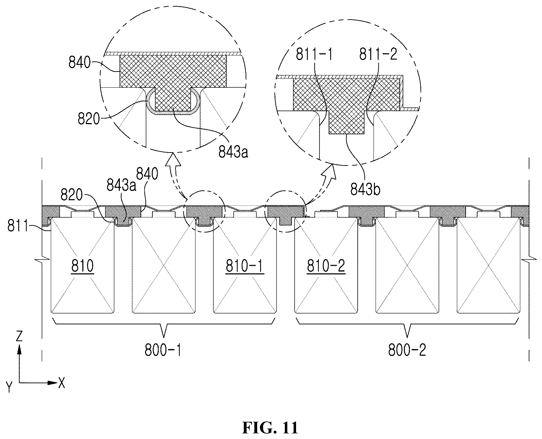

FIG. 11 is a cross-sectional view illustrating another example of the battery pack according to some embodiments of the present disclosure.

Referring to FIG. 11, in some embodiments, a first busbar 820 may be omitted from some of a plurality of protrusions 843a and 843b. That is, the first protrusion 843a is provided with the first busbar 820 as described above, while the second protrusion 843b excludes the first busbar 820, i.e., the first busbar 820 is omitted from the second protrusion 843b. The first and second protrusions 843a and 843b may be provided in the same or similar manner and may be distinguished depending on whether the first busbar 820 is provided.

The first protrusion 843a and the first busbar 820 may be provided generally in the same or similar manner as in the embodiments described above. The first busbar 820 may be provided on the first protrusion 843a and may be electrically connected to a first electrode terminal 811 provided on a side surface region of each battery cell 810.

In contrast, in the second protrusion 843b, the first busbar 820 may be omitted. That is, the second protrusion 843b may be one of the plurality of protrusions 843a and 843b provided on a first insulator 840 from which the first busbar 820 may be omitted. As the first busbar 820 is omitted, the battery cells 810 disposed with the second protrusion 843b interposed therebetween may be electrically disconnected. That is, in the illustrated embodiment, a first electrode terminal 811-1 of a battery cell 810-1 disposed at a front end of a first battery module 800-1 and a second electrode terminal 811-2 of a battery cell 810-2 disposed at a rear end of a second battery module 800-2 may be electrically disconnected. Accordingly, an electrical series connection between the first and second battery modules 800-1 and 800-2 may be appropriately implemented.

In some embodiments, a battery pack may form a single electrical connection structure in which the first and second battery modules 800-1 and 800-2 are integrated in the manner described above. For example, in the illustrated embodiment, the first insulator 840 of the first battery module 800-1 and the first insulator 840 of the second battery module 800-2 may be integrally provided as a single insulating component. Accordingly, the first and second battery modules 800-1 and 800-2 may be provided as an integrated battery pack. That is, the first and second battery modules may be implemented identically or similarly in a single battery pack unit.

As described above, a battery pack may be provided according to various embodiments of the present disclosure.

In some embodiments, the battery pack may include a plurality of battery cells, and the plurality of battery cells may be electrically connected through first and second busbars. In addition, the first and second busbars may be properly insulated by a first insulator disposed therebetween. Accordingly, some embodiments of the present disclosure may more easily implement electrical connections for the plurality of battery cells.

In some embodiments of the present disclosure, a structure in which a first busbar, a first insulator, and a second busbar are sequentially stacked may be provided. In some embodiments, two or more of the first busbar, the first insulator, and the second busbar may be provided in a pre-assembled or integrally formed configuration. Accordingly, some embodiments of the present disclosure may enable the manufacturing process to be easily performed.

Some embodiments of the present disclosure may have a structure in which the first and second busbars are spaced apart from each other with a first insulator interposed therebetween. In some embodiments, assembly positions of the first and second busbars may be properly guided by mechanical coupling elements. Accordingly, some embodiments of the present disclosure may improve the reliability of electrical connections.

Some embodiments of the present disclosure can provide a battery pack.

Some embodiments of the present disclosure can provide a battery pack that can more easily implement electrical connections for a plurality of battery cells.

Some embodiments of the present disclosure can provide a battery pack in which a manufacturing process can be easily performed.

Some embodiments of the present disclosure can provide a battery pack that can improve the reliability of electrical connections.

Some embodiments of the present disclosure can provide a battery pack that can improve structural stability.

Some of the aspects of the present disclosure are as follows:
Aspect 1: A battery pack comprising one or more battery modules may be provided. Each of the battery modules may include a plurality of battery cells having a plurality of first electrode terminals and a plurality of second electrode terminals, a first busbar electrically connected to the plurality of first electrode terminals, a second busbar electrically connected to the plurality of second electrode terminals, and a first insulator disposed between the first busbar and the second busbar and configured to electrically insulate the first and second busbars.
Aspect 2: The battery pack of aspect 1, wherein the first busbar may comprise a plurality of first connection portions provided to respectively correspond to the plurality of first electrode terminals and a first access hole provided in each first connection portion to expose each second electrode terminal toward the second busbar.
Aspect 3: The battery pack according to any one of the preceding aspects, wherein the first access hole may have a diameter greater than a diameter of the second electrode terminal to contain the second electrode terminal therein.
Aspect 4: The battery pack according to any one of the preceding aspects, wherein the first insulator may comprise a plurality of first guide surfaces provided to respectively correspond to the plurality of second electrode terminals and configured to guide a position of the second busbar and a second access hole provided in each first guide surface to expose each second electrode terminal toward the second busbar.
Aspect 5: The battery pack according to any one of the preceding aspects, wherein the first guide surface may be inclined downward toward the second access hole.
Aspect 6: The battery pack according to any one of the preceding aspects, wherein the second access hole may have a diameter corresponding to a diameter of the second electrode terminal.
Aspect 7: The battery pack according to any one of the preceding aspects, wherein the second busbar may include a plurality of second connection portions provided to respectively correspond to the plurality of second electrode terminals and a second guide surface corresponding to the second connection portion and disposed to guide a position of the second busbar relative to the first insulator.
Aspect 8: The battery pack according to any one of the preceding aspects, wherein the first busbar may be disposed on upper portions of the plurality of battery cells to be electrically connected to the plurality of first electrode terminals and the second busbar and the first insulator may be integrally provided and disposed on an upper portion of the first busbar.
Aspect 9: The battery pack according to any one of the preceding aspects, wherein the battery module may further include a second insulator disposed on a surface of the first busbar opposite to a surface on which the first insulator is disposed.
Aspect 10: The battery pack according to any one of the preceding aspects, wherein the battery module may include a second insulator provided on a lower surface of the first busbar, and a third insulator provided on an upper surface of the second busbar. The first to third insulators may be in a sheet form, may include the first and second busbars therein, and may be thermally bonded thereto.
Aspect 11: The battery pack according to any one of the preceding aspects, wherein the first electrode terminal may be provided on an edge region of an upper surface of the battery cell, the second electrode terminal may be provided on a central region of the upper surface of the battery cell, and the first and second busbars may be disposed on upper portions of the plurality of battery cells to be electrically connected to the first and second electrode terminals, respectively.
Aspect 12: The battery pack according to any one of the preceding aspects, wherein the first electrode terminal may be provided on a side surface region of the battery cell, the second electrode terminal may be provided on a central region of an upper surface of the battery cell, at least a portion of the first busbar may be disposed on the side surface region to be electrically connected to the first electrode terminal, the second busbar may be disposed on upper portions of the plurality of battery cells to be electrically connected to the second electrode terminal.
Aspect 13: The battery pack according to any one of the preceding aspects, wherein the first insulator may include a protrusion extending between adjacent battery cells toward the side surface region.
Aspect 14: The battery pack according to any one of the preceding aspects, wherein the first busbar may comprise an exposed portion extending outward from the second busbar for electrical connection with another adjacent battery module.
Aspect 15: The battery pack according to any one of the preceding aspects, wherein the second busbar may include an extending portion extending outward from the first busbar for electrical connection with another adjacent battery module.

The above description merely illustrate various embodiments of the present disclosure but is not intended to limit the present disclosure. Other configurations may be further implemented, and variations and modifications may be made to the described embodiments by those skilled in the art without departing from the scope of the present disclosure.

## Claims

1. A battery pack comprising:
one or more battery modules,
wherein each of the battery modules comprises:
a plurality of battery cells having a plurality of first electrode terminals and a plurality of second electrode terminals; a first busbar electrically connected to the plurality of first electrode terminals;
a second busbar electrically connected to the plurality of second electrode terminals; and
a first insulator disposed between the first busbar and the second busbar and configured to electrically insulate the first and second busbars.

2. The battery pack of claim 1, wherein the first busbar comprises:
a plurality of first connection portions provided to respectively correspond to the plurality of first electrode terminals; and
a first access hole provided in each first connection portion to expose each second electrode terminal toward the second busbar.

3. The battery pack according to any one of the preceding claims, wherein the first access hole has a diameter greater than a diameter of the second electrode terminal to contain the second electrode terminal therein.

4. The battery pack according to any one of the preceding claims, wherein the first insulator comprises:
a plurality of first guide surfaces provided to respectively correspond to the plurality of second electrode terminals and configured to guide a position of the second busbar; and
a second access hole provided in each first guide surface to expose each second electrode terminal toward the second busbar.

5. The battery pack according to any one of the preceding claims, wherein the first guide surface is inclined downward toward the second access hole.

6. The battery pack according to any one of the preceding claims, wherein the second access hole has a diameter corresponding to a diameter of the second electrode terminal.

7. The battery pack according to any one of the preceding claims, wherein the second busbar comprises:
a plurality of second connection portions provided to respectively correspond to the plurality of second electrode terminals; and
a second guide surface corresponding to the second connection portion and disposed to guide a position of the second busbar relative to the first insulator.

8. The battery pack according to any one of the preceding claims, wherein the first busbar is disposed on upper portions of the plurality of battery cells to be electrically connected to the plurality of first electrode terminals, and
the second busbar and the first insulator are integrally provided and disposed on an upper portion of the first busbar.

9. The battery pack according to any one of the preceding claims, wherein the battery module further comprises a second insulator disposed on a surface of the first busbar opposite to a surface on which the first insulator is disposed.

10. The battery pack according to any one of the preceding claims, wherein the battery module comprises:
a second insulator provided on a lower surface of the first busbar; and
a third insulator provided on an upper surface of the second busbar, and
wherein the first to third insulators are in a sheet form, comprise the first and second busbars therein, and are thermally bonded thereto.

11. The battery pack according to any one of the preceding claims, wherein the first electrode terminal is provided on an edge region of an upper surface of the battery cell,
the second electrode terminal is provided on a central region of the upper surface of the battery cell, and
the first and second busbars are disposed on upper portions of the plurality of battery cells to be electrically connected to the first and second electrode terminals, respectively.

12. The battery pack according to any one of the preceding claims, wherein the first electrode terminal is provided on a side surface region of the battery cell,
the second electrode terminal is provided on a central region of an upper surface of the battery cell,
at least a portion of the first busbar is disposed on the side surface region to be electrically connected to the first electrode terminal, and
the second busbar is disposed on upper portions of the plurality of battery cells to be electrically connected to the second electrode terminal.

13. The battery pack according to any one of the preceding claims, wherein the first insulator comprises a protrusion extending between adjacent battery cells toward the side surface region.

14. The battery pack according to any one of the preceding claims, wherein the first busbar comprises an exposed portion extending outward from the second busbar for electrical connection with another adjacent battery module.

15. The battery pack according to any one of the preceding claims, wherein the second busbar comprises an extending portion extending outward from the first busbar for electrical connection with another adjacent battery module.
